(19) Europäisches Patentamt
European Patent Office
Office européen des brevets

(11) **EP 0 700 825 B1**

(12) **EUROPEAN PATENT SPECIFICATION**

(45) Date of publication and mention
of the grant of the patent:
**13.08.1997 Bulletin 1997/33**

(51) Int. Cl.$^6$: **B62M 23/02**

(21) Application number: **95113636.5**

(22) Date of filing: **30.08.1995**

(54) **Pedaling force detector for motor-assisted bicycle**

Detektor für die Pedalkraft bei Fahrrädern mit Hilfsmotor

Détecteur pour la force de pédale de bicyclettes avec moteur auxiliaire

(84) Designated Contracting States:
**DE ES FR IT**

(30) Priority: **07.09.1994 JP 213445/94**

(43) Date of publication of application:
**13.03.1996 Bulletin 1996/11**

(73) Proprietor:
**HONDA GIKEN KOGYO KABUSHIKI KAISHA
Minato-ku Tokyo (JP)**

(72) Inventors:
• **Kuroki, Masahiro
Wako-shi, Saitama (JP)**
• **Kimura, Taturo
Wako-shi, Saitama (JP)**

(74) Representative: **Liska, Horst, Dr.-Ing. et al
Patentanwälte
H. Weickmann,K. Fincke,F.A. Weickmann,
B. Huber,H. Liska,J. Prechtel,B. Böhm
Postfach 86 08 20
81635 München (DE)**

(56) References cited:
**EP-A- 0 569 954          US-A- 4 793 208
US-A- 5 024 286**

• **PATENT ABSTRACTS OF JAPAN, unexamined
applications, M field, vol. 17, no. 151, March 25,
1993 THE PATENT OFFICE JAPANESE
GOVERNMENT page 100 M 1387; & JP-A-04 321
482 (YAMAHA)**

## Description

The present invention relates to a pedaling force detector for a motor-assisted bicycle having a power transmission system for transmitting a pedaling force applied to a pair of pedals to a wheel and incorporating an assisting motor, and designed to control the output of the assisting motor on the basis of a pedaling force applied to pedals and detected by a pedaling force detecting means.

The applicant of the present patent application has previously proposed a pedaling force detector for such a motor-assisted bicycle, comprising a torsion bar having a first end connected to a crank ale to be driven for rotation by operating pedals and a second end connected through an overrunning clutch to an assisting motor and a wheel, and a sensor for detecting the angle of torsion of the torsion bar in Japanese Patent Application No. HEI 6-104152.

This known pedaling force detector for a motor-assisted bicycle has a torsion bar extended in the axial through hole of a crank axle coaxially with the crank axle. Since the axial through hole extends through the crank axle, grease for lubricating the sliding surfaces of the torsion bar and the crank axle is liable to escape outside from the crank axle and, consequently, the crank axle needs to be replenished periodically with grease.

The present invention has been made in view of this problem and it is an object of the present invention to prevent the grease for lubricating the torsion bar of the pedaling force detector from escaping from the crank axle to reduce the frequency of lubricating work for replenishing the crank axle with grease.

With the foregoing object in view, according to an invention stated in claim 1, the present invention provides a pedaling force detector comprising a pedaling force detecting means for detecting a pedaling force applied to a pair of pedals, for a motor-assisted bicycle comprising a power transmission system for transmitting a pedaling force applied to pedals to a wheel, and an assisting motor incorporated into the power transmission system so that the output thereof is controlled on the basis of the pedaling force applied to the pedals and detected by the pedaling force detecting means; the pedaling force detecting means comprising: a torsion bar having a first end connected to a crank axle to be driven for rotation by operating the pedals and a second end connected to the assisting motor and the wheel through an overrunning clutch; and a stroke sensor for detecting the angle of torsion of the torsion bar; the crank axle comprising a first half crank axle connected to one of the pedals and having the shape of a substantially cylindrical bottomed cylinder, and a second half crank axle coaxially extended in and connected to the first half crank axle, the torsion bar coaxially extended in the first half crank axle being formed integrally with the second half crank axle.

The torsion bar formed integrally with the second half crank axle and extended in the first half crank axle coaxially with the first half crank axle is twisted when the the first half crank axle and the second half crank axle integrally combined with the first half crank axle are rotated by applying a pedaling force to the pedals, and the stroke sensor detects the torsion of the torsion bar. The torsion bar is lubricated with the grease sealed in the first half crank axle having the shape of a substantially cylindrical bottomed cylinder. Since the first half crank axle is bottomed and the open end of the first half crank axle is closed by the second half crank axle, the grease contained in the first half crank axle does not leak outside from the first half crank axle.

The crank axle comprises the first half crank axle connected to one of the pedals and having the shape of a substantially cylindrical bottomed cylinder and the second half crank axle connected to the other pedal and inserted coaxially in and connected to the first half crank axle, and the torsion bar is formed integrally with the second half crank axle and extended in and coaxially with the first half crank axle. Therefore, the grease-sealed in the first half crank axle to lubricate the torsion bar will not be scattered by centrifugal force and held in the first half crank axle. Accordingly, the torsion bar can be surely lubricated even if the first half crank axle is not replenished with grease for a long time.

The overrunning clutch preferably comprises: an inner clutch ring loosely put on the first half crank axle and connected to the second end of the torsion bar, and an outer clutch ring connected to the assisting motor and the wheel, and the inner clutch ring is supported for rotation relative to the outer clutch ring in the outer clutch ring.

Accordingly, the inner clutch ring connected to the second end of the torsion bar is supported for rotation in the outer clutch ring connected to the assisting motor and the wheel. Therefore, the inner clutch ring is never wrenched when rotating relative to the overrunning clutch.

The first overrunning clutch comprises the inner clutch ring loosely put on the first half crank axle and connected to the second end of the torsion bar, and the outer clutch ring connected to the assisting motor and the wheel, and the inner clutch is supported for rotation in the outer clutch ring. Therefore, the inner clutch ring is never wrenched relative to the first half crank axle and hence the overrunning clutch is able to operate smoothly.

Preferred embodiments of the present invention will be described hereinafter with reference to the accompanying drawings, in which:

Fig. 1 is a general side view of a bicycle with assisting motor.

Fig. 2 is an enlarged sectional view taken on line 2-2 in Fig. 1.

Fig. 3 is a sectional view taken on line 3-3 in Fig. 2.

Fig. 4 is a sectional view taken on line 4-4 in Fig. 3.

Fig. 5 is an enlarged sectional view taken on line 5-5 in Fig. 2.

Fig. 6 is an enlarged view of a portion indicated at 6 in Fig. 4.

Fig. 7 is a diagrammatic view taken along a direction indicated at 7 in Fig. 1.

Fig. 8 is a map for use in controlling an assisting motor in a duty control mode.

Fig. 9 is a graph showing the output characteristic of an assisting motor.

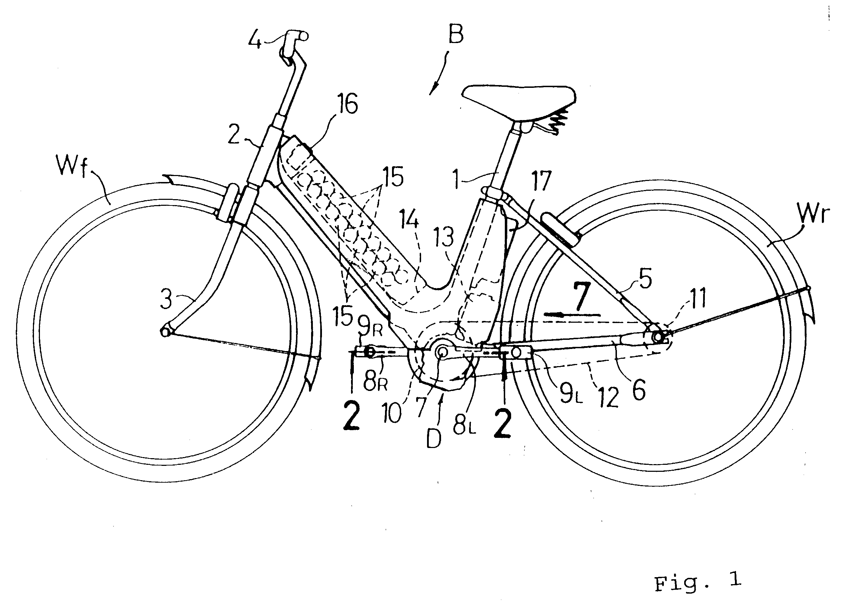

Referring to Fig. 1, a bicycle B has a main frame 1 having a V-shape in a side view, a front fork 3 is supported for turning on a head pipe 2 attached to the front end of the main frame 1, a handlebar 4 is attached to the upper end of the front fork 3, and a front wheel Wf is supported on the lower end of the front fork 3. A rear fork 6 extended backward from a part of the main frame 1 near the lower end of the main frame 1 is held rigidly in position by stays 5, and a rear wheel Wr is supported on the rear fork 6. A crank axle 7 is supported for rotation on the lower end of the main frame 1, a pair of crank arms $8_R$ and $8_L$ are mounted on the crank axle 7, and pedals $9_R$ and $9_L$ are attached to the free ends of the crank arms $8_R$ and $8_L$ respectively. A chain 12 is extended between a driving sprocket 10 driven for rotation by the crank axle 7 and a driven sprocket 11 mounted on the axle of the rear wheel Wr. When a pedaling force is applied to the-pedals $9_R$ and $9_L$ to rotate the crank axle 7, the rotation of the crank axle 7 is transmitted through the driving sprocket 10, the chain 12 and the driven sprocket 11 to the rear wheel Wr.

An assisting motor 13 connected to the driving sprocket 10 disposed in the lower part of the main frame 1 generates an assistive driving force for assisting a pedaling force applied to the pedals $9_R$ and $9_L$. A battery 15 comprising a plurality of Ni-Cd cells for driving the assisting motor is contained in a battery box 14 disposed in the front part of the main frame 1. A main switch 16 is attached to the front wall of the battery box 14. A controller 17 comprising an electronic control unit for controlling the assisting motor 13, and a motor driver is disposed in the rear part of the main frame 1.

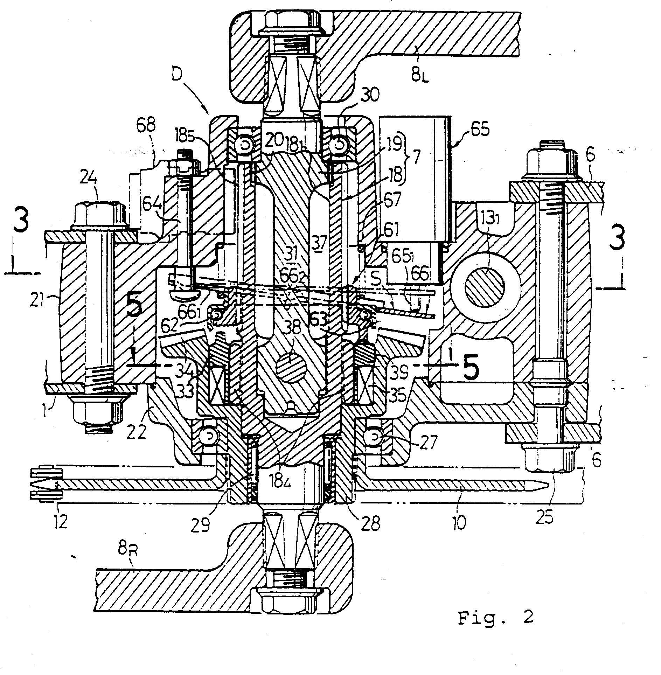

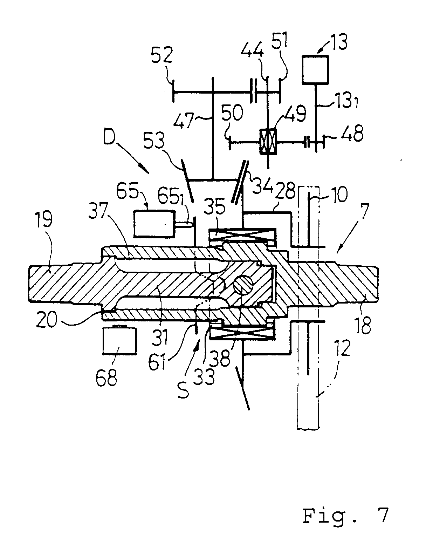

A driving mechanism D included in the bicycle B will be described in detail hereinafter with reference to Figs. 2 to 7.

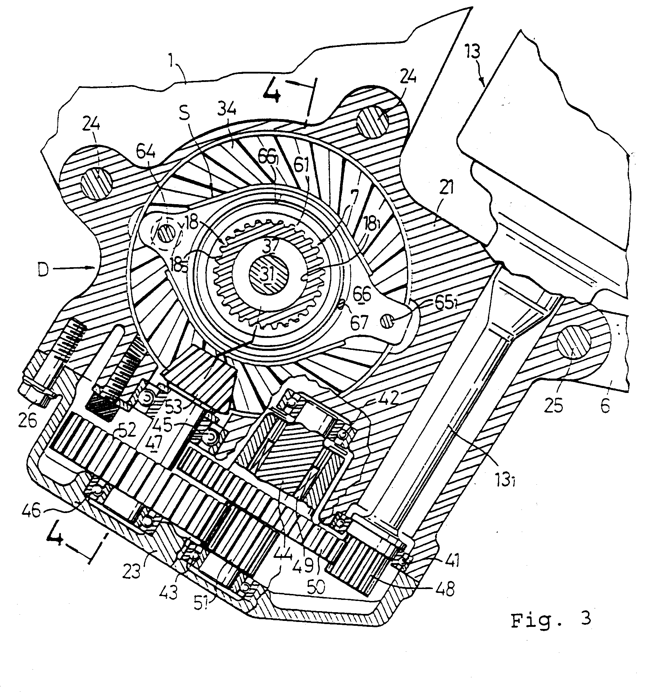

A gear housing containing the driving mechanism D comprises a left housing member 21, i.e., a main housing member, a right housing member 22 attached to the right open end of the left housing member 21, and a lower housing member 23 joined to the lower surface of the left housing member 21. The left housing member 21 is fastened at its front upper part to the lower end of the main frame 1 with two bolts 24, and both the respective rear parts of the left housing member 21 and the right housing member 22 are fastened to the front end of the rear fork 6 with a single bolt 25. The lower housing member 23 is fastened to the lower surface of the left housing member 21 with a plurality of bolts 26 (only one of the bolts 26 is shown in Fig. 3).

The crank axle 7 is formed by combining a first half crank axle 18 joined to the right crank arm $8_R$, and a second half crank axle 19 joined to the left crank arm $8_L$. The first half crank axle 18 is a substantially cylindrical bottomed member having the closed right end and the open left end. The right end of the first half crank axle 18 is supported in roller bearings 29 fitted in a sleeve 28 supported in a ball bearing 27 on the right housing member 22. The second half crank axle 19 is coaxially inserted in the first half crank axle 18, interlocked with the first half crank axle 18 with splines 20 and supported in ball bearing 30 on the left housing member 21. Thus, the first half crank axle 18 and the second half crank axle 19 are supported integrally for rotation on the left housing member 21 and the right housing member 22.

A torsion bar 31 formed integrally with the second half crank axle 19 is extended coaxially with the first half crank axle 18 in the bore $18_1$ of the first half crank axle 18. The torsion bar 31 has a reduced middle portion so that a space 37 for containing grease is defined by the bore $18_1$ and the reduced middle portion. Lubricating holes $18_3$ are formed in the first half crank axle 18 to supply the grease from the space 37 to the sliding surface of an inner slider 61.

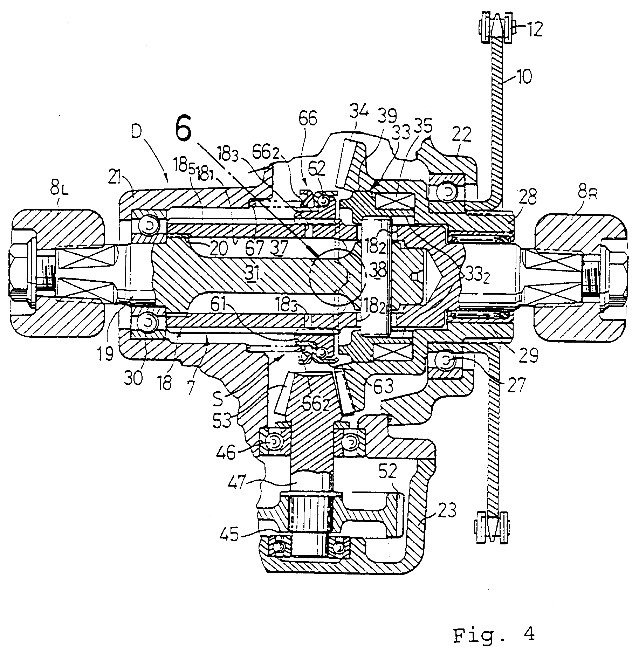

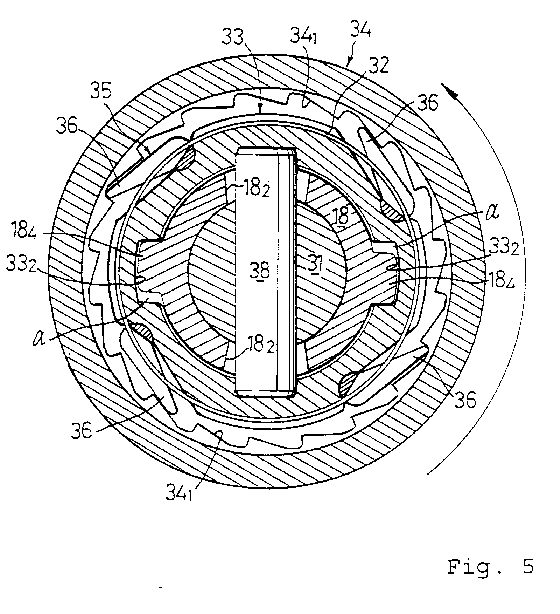

The left end (input end) of the torsion bar 31 merges into the second half crank axle 19. A pin 38 pressure-fitted into the right end (output end) of the torsion bar 31 is loosely inserted in a pair of holes $18_2$ formed in the first half crank axle 18 as shown in Figs. 4 and 5. The opposite ends of the pin 38 projecting radially outward through the pair of holes $18_2$ from the outer surface of the first half crank axle 18 are pressure-fitted in an annular driving cam 33 loosely fitted on the first half crank axle 18 to interlock the right end of the torsion bar 31 with the driving cam 33.

The driving cam 33 is provided in its inner circumference with a pair of recesses $33_2$, and a pair of projections $18_4$ formed on the outer circumference of the first half crank axle 18 are received in the recesses $33_2$, respectively. As best shown in Fig. 5, a circumferential gap $\alpha$ is formed between each recess $33_2$ and the corresponding projection $18_4$ to allow the first half crank axle 18 to turn relative to the driving cam 33, and to limit the maximum torsion of the torsion bar 31 when an excessive load acts on the torsion bar 31 to prevent the breakage of the torsion bar 31.

Since the crank axle 7 is formed by combining the cylindrical bottomed first half crank axle 18 and the second half crank axle 19 coaxially extended in and interlocked with the first half crank axle 18 with the splines 20, as is obvious from Fig. 4, the torsion bar 31 can be surely lubricated by the grease filled in the space 37 formed inside the first half crank axle 18. Since the grease can be held in the space 37 for a long time and only a small portion of the grease is caused to escape through the lubricating holes $18_3$ and the holes $18_2$ by centrifugal force when the crank axle 7 rotates, the crank axle 7 need not be frequently greased.

A first overrunning clutch 35 employs the bevel gear 34 formed integrally with the sleeve 28 and the driving cam 33 as an outer clutch ring and as an inner clutch ring, respectively. As best shown in Fig. 5, the first overrunning clutch 35 has four catches 36 pivotally supported on the periphery of the driving cam 33 and biased radially outward with a spring ring 32, and a plurality of ratchet teeth $34_1$ formed on the inner circumference of the bevel gear 34.

The outer circumference 39 of the driving cam 33 (inner clutch ring) is in sliding contact with the inner circumference of the bevel gear 34 (outer clutch ring) (Figs. 2 and 4). Eccentric load due to the engagement of the catches 36 and the ratchet teeth $34_1$ is absorbed between the driving cam 33 and the bevel gear 34 and does not act on the crank axle 7. Thus, the variation of frictional force due to the phase difference between the crank axle 7 and the driving cam 33 (inner clutch ring) does not occur and the first overrunning clutch 35 is able to operate satisfactorily.

When the crank axle 7 is rotated in the normal direction by working the pedals $9_R$ and $9_L$, the torque of the crank axle 7 is transmitted through the torsion bar 31, the driving cam 33, the first overrunning clutch 35, the bevel gear 34 and the sleeve 28 to the driving sprocket 10 splined to the outer circumference of the sleeve 28. When the pedals $9_R$ and $9_L$ are worked to rotate the crank axle 7 in the reverse direction, the first overrunning clutch 35 allows the crank axle 7 to rotate in the reverse direction relative to the bevel gear 34.

As best shown in Fig. 3, the assisting motor 13 is held on the left housing member 21 so that the output shaft $13_1$ thereof extends obliquely forward and downward, and the free end of the output shaft $13_1$ is supported in a ball bearing 41 on the lower end of the left housing member 21. A first intermediate shaft 44 is supported in a pair of ball bearings 42 and 43 on the left housing member 21 and the lower housing member 23, and a second intermediate shaft 47 is supported in a pair of ball bearings 45 and 46 on the left housing member 21 and the lower housing member 23. A spur gear 48 fixed to the output shaft $13_1$ of the assisting motor 13 is in engagement with a spur gear 50 mounted on a second overrunning clutch 49 coupled with the first intermediate shaft 44, a spur gear 51 fixed to the first intermediate shaft 44 is in engagement with a spur gear 52 fixed to the second intermediate shaft 47, and a bevel gear 53 fixed to the second intermediate shaft 47 is in engagement with the bevel gear 34 fixed to the sleeve 28.

When the assisting motor 13 is driven, the torque of the output shaft $13_1$ is transmitted through the four spur gears 48, 50, 51 and 52, the two bevel gears 53 and 34 and the sleeve 28 to the driving sprocket 10. The second overrunning clutch 49 allows the driving sprocket 10 to be rotated freely by working the pedals $9_R$ and $9_L$ relative to the output shaft $13_1$ when the assisting motor 13 stops due to the exhaustion of the battery 15.

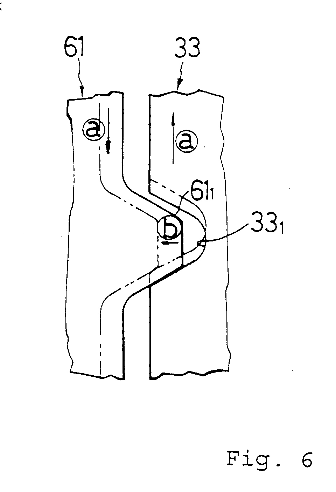

A pedaling force detecting means S for detecting a pedaling force applied to the pedals $9_R$ and $9_L$ has an inner slider 61 fitly put on the first half crank axle 18 of the crank axle 7, provided with splines $18_5$ so as to be axially slidable and rotatable together with the first half crank axle 18. An outer slider 63 is supported on a plurality of balls 62 seated on the flange of the inner slider 61 for rotation relative to the inner slider 61. As is obvious from Fig. 6, a pair of concave cam surfaces $33_1$ are formed on a diameter in the end surface of the driving cam 33 facing the inner slider 61, and a pair of convex cam surfaces $61_1$ are formed in the end surface of the inner slider 61 so as to be in engagement with the concave cam surfaces $33_1$.

A pivot bolt 64 and a stroke sensor 65 are disposed on the opposite sides, respectively, of the crank axle 7 on the left housing member 1. A sensor arm 66 has one end pivotally connected to the pivot bolt 64 and the other end in contact with the detecting rod $65_1$ of the stroke sensor 65. The sensor arm 66 is provided in its middle part with an opening $66_1$ (Fig. 2) through which the crank axle 7, the inner slider 61 and the outer slider 63 extend. A pair of projections $66_2$ (Fig. 4) project radially inward from the edge of the opening $66_1$. A spring 67 is compressed between the pair of projections $66_2$ and the left housing member 21 to bias the sensor arm 66 to the right as viewed in Fig. 4. Consequently, the pair of projections $66_2$ of the sensor arm 66 push the outer slider 63 against the balls 62, whereby the inner slider 61 is pressed against the driving cam 33 so that the cam surfaces $33_1$ of the driving cam 33 are resiliently in contact with the cam surfaces $61_1$ of the inner slider 61.

A crank axle speed sensor 68 is held on the left housing member 21 opposite to the splines $18_5$ formed on the outer surface of the first half crank axle 18 to detect the rotating speed of the crank axle 7.

The operation of the embodiment of the present invention thus constructed will be described hereinafter.

When the pedals $9_R$ and $9_L$ are worked to pedal the bicycle, the crank arms $8_R$ and $8_L$ rotate the crank axle 7. The torque of the crank axle 7 is transmitted through the torsion bar 31, the driving cam 33, the first overrunning clutch 35, the bevel gear 34, the sleeve 28, the driving sprocket 10, the chain 12 and the driven sprocket 11 to the rear wheel Wr. The pedaling force detecting means S detects a pedaling force applied to the pedals $9_R$ and $9_L$.

A torque corresponding to the pedaling force applied to the pedals $9_R$ and $9_L$ acts on the torsion bar 31 to twist the torsion bar 31 through a predetermined angle relative to the crank axle 7. When the torsion bar 31 is twisted relative to the crank axle 7, the inner slider 61 mounted on the crank axle 7 so as to be axially slidable and restrained from turning relative to the crank axle 7 turns in the direction of the arrow $a$ relative to the driving cam 33 joined to the output end of the torsion bar 31 as shown in Fig. 6. Consequently, the cam surfaces $61_1$ of the inner slider 61 are pressed against the

cam surfaces $33_1$ of the driving cam 33, the inner slider 61 is caused to slide in the direction of the arrow *b* on the crank axle 7 against the resilience of the spring 67, the outer slider 63 combined with the inner slider 61 pushes the sensor arm 66 at the projections $66_2$ to turn the sensor arm 66 on the pivot bolt 64, and then the sensor arm 66 pushes the detecting rod $65_1$ of the stroke sensor 65. Since the stroke of the detecting rod $65_1$ of the stroke sensor 65 is proportional to the torsional angle of the torsion bar 31 corresponding to the pedaling force applied to the pedals $9_R$ and $9_L$, the pedaling force is determined on the basis of the output of the stroke sensor 65.

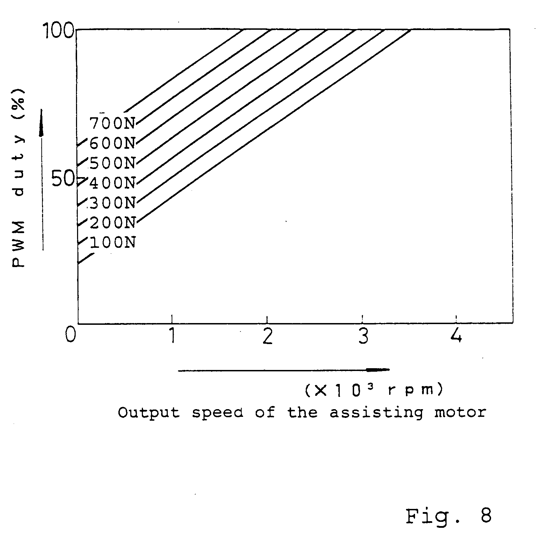

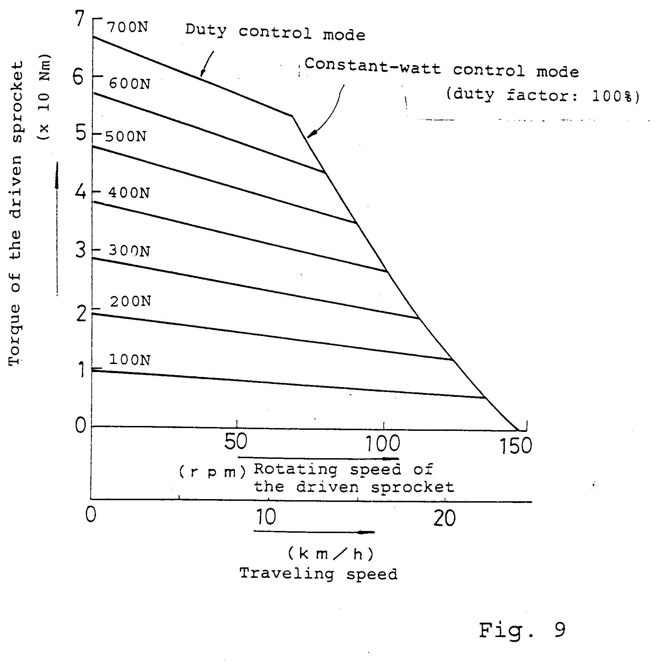

A method of controlling the assisting motor 13 will be described hereinafter with reference to Figs. 8 and 9.

The controller 17 controls and drives the assisting motor 13 on the basis of the output signal of the stroke sensor 65 for detecting the pedaling force applied to the pedals $9_R$ and $9_L$, and the output signal of the crank axle speed sensor 68 for detecting the rotating speed of the crank axle 7.

Referring to Fig. 8 showing a map for controlling the assisting motor 13 in a duty control mode, the duty factor of the current for driving the assisting motor 13 is increased linearly in proportion to the output speed of the assisting motor 13, i.e., the output signal of the crank axle speed sensor 68, and is increased linearly in proportion to the pedaling force applied to the pedals $9_R$ and $9_L$, i.e., the output signal of the stroke sensor 65.

Accordingly, for example, the duty factor is increased when the traveling speed increases and the running resistance increases accordingly while the pedaling force is fixed. For example, when the pedaling force is increased to travel uphill during travel at a fixed traveling speed, the duty factor is increased. When the pedaling force is decreased to travel downhill, the duty factor is decreased.

Fig. 9 is a graph showing the output characteristic of the assisting motor 13, in which the rotating speed of the driven sprocket 11 or the traveling speed is measured on the horizontal axis and the torque of the driven sprocket 11 corresponding to the output torque of the assisting motor 13 is measured on the vertical axis.

The output of the assisting motor 13 is proportional to the pedaling force when the traveling speed is zero. The duty factor is increased gradually according to the map shown in Fig. 8 and the output torque of the assisting motor 13 is decreased as the traveling speed increases. The characteristic for an expected maximum pedaling force of about 700 N is determined so that supply current may not exceed the maximum output current of the battery 15 in view of not reducing the durability of the battery 15. After the duty factor has increased to 100% for each pedaling force, the output torque of the assisting motor 13 decreases along a common constant-watt characteristic curve.

The constant-watt characteristic curve represents the characteristic when the assisting motor 13 is driven at a duty factor of 100%, and is a hyperbola expressed by (output torque of the assisting motor) × (output speed of the assisting motor) = constant, i.e., (torque of the driven sprocket) × (rotating speed of the driven sprocket) = constant .

Since both the linear characteristic in the duty control mode and the hyperbolic characteristic in the constant-watt control mode decline to the right and smoothly connected, the torque does not change sharply as the traveling speed increases and hence the assistive force does not give any sense of incompatibility.

As mentioned above, the assisting motor 13 is controlled in the duty control mode in which the duty factor of the assisting motor 13 is increased according to the increase of the traveling speed in the low traveling speed range, and is controlled in the constant-watt mode in which the assisting motor 13 is controlled so as to operate at the maximum output after the duty factor has been increased to 100%. Therefore, when traveling at a traveling speed in the high traveling speed range (a range where the traveling speed is about 11 km/hr or above), the assisting motor 13 always operates at its maximum output capacity and hence the assisting motor 13 need not have a surplus output capacity.

If a large motor having an excess output capacity is used instead of the assisting motor 13 and the duty factor is reduced to reduce the torque in the high traveling speed range, the large assisting motor is heavy and the weight of the power transmission system D must be increased to secure sufficient strength, which undesirably increases load on the rider during man-powered traveling Since the assisting motor 13 employed in this embodiment is small and has the least necessary output capacity, the assisting motor 13 is lightweight and the power transmission system D may be of a lightweight construction.

Although the present invention has been described in the specific embodiment thereof, many changes and variations are possible therein without departing from the scope thereof.

Summarized, the present invention prevents grease for lubricating a torsion bar for detecting pedaling force applied to the pedals of a motor-assisted bicycle from scattering.

A crank axle to be driven for rotation by crank arms comprises a first half crank axle having the shape of a substantially cylindrical bottomed cylinder and a second half crank axle inserted coaxially in and connected to the first half crank axle, and a torsion bar is formed integrally with the second half crank axle and extended in and coaxially with the first half crank axle. The free end of the torsion bar is connected to a driving cam with pins. A pedaling force is determined on the basis of an angular displacement of the driving cam relative to the first half crank axle due to the torsion of the torsion bar. The grease sealed in a space formed in the first half crank axle to lubricate the torsion bar will not be scattered by centrifugal force.

## Claims

1. A pedaling force detector comprising a pedaling force detecting means (S) for detecting a pedaling force applied to a pair of pedals ($9_R$, $9_L$), for a motor-assisted bicycle comprising a power transmission system (D) for transmitting a pedaling force applied to pedals ($9_R$, $9_L$) to a wheel (Wr), and an assisting motor (13) incorporated into the power transmission system (D) so that the output thereof is controlled on the basis of the pedaling force applied to the pedals ($9_R$, $9_L$) and detected by the pedaling force detecting means (S);

   said pedaling force detecting means (S) comprising: a torsion bar (31) having a first end connected to a crank axle (7) to be driven for rotation by operating the pedals ($9_R$, $9_L$) and a second end connected to the assisting motor (13) and the wheel (Wr) through an overrunning clutch (35); and a stroke sensor (65) for detecting the angle of torsion of the torsion bar (31);
   said crank axle (7) comprising a first half crank axle (18) connected to one ($9_R$) of the pedals ($9_R$, $9_L$) and having the shape of a substantially cylindrical bottomed cylinder, and a second-half crank axle (19) coaxially extended in and connected to the first half crank axle (18), the torsion bar (31) coaxially extended in the first half crank axle (18) being formed integrally with the second half crank axle (19).

2. A pedaling force detector according to claim 1, wherein the overrunning clutch (35) comprises: an inner clutch ring (33) connected to the the second end of the torsion bar (31), and an outer clutch ring (34) connected to the assisting motor (13) and the wheel (Wr), and the inner clutch ring (33) is supported for rotation relative to the outer clutch ring (34) in the outer clutch ring (34).

## Patentansprüche

1. Tretkraftdetektor, umfassend eine Tretkrafterfassungseinrichtung (S) zum Erfassen einer auf ein Paar Pedale ($9_R$, $9_L$) ausgeübten Tretkraft, und zwar für ein motorunterstütztes Zweirad, welches ein Kraftübertragungssystem (D) zum Übertragen einer auf Pedale ($9_R$, $9_L$) ausgeübten Tretkraft auf ein Rad (Wr) und einen in das Kraftübertragungssystem (D) eingebauten Unterstützungsmotor (13) aufweist, so daß dessen Ausgangsleistung auf der Grundlage der auf die Pedale ($9_R$, $9_L$) ausgeübten und durch die Tretkrafterfassungseinrichtung (S) erfaßten Tretkraft gesteuert wird;
   wobei die Tretkrafterfassungseinrichtung (S) umfaßt: einen Torsionsstab (31), der ein mit einer Kurbelwelle (7) zum Drehantrieb durch Betätigen der Pedale ($9_R$, $9_L$) verbundenes erstes Ende und ein über eine Freilaufkupplung (35) mit dem Unterstützungsmotor (13) und dem Rad (Wr) verbundenes zweites Ende aufweist, sowie einen Hubsensor (65) zum Erfassen des Torsionswinkels des Torsionsstabs (31);
   wobei die Kurbelwelle (7) eine erste Kurbelwellenhälfte (18), die mit einem ($9_R$) der Pedale ($9_R$, $9_L$) verbunden ist und die Form eines im wesentlichen zylindrischen, mit einem Boden versehenen Zylinders aufweist, und eine zweite Kurbelwellenhälfte (19) umfaßt, die sich in der ersten Kurbelwellenhälfte (18) koaxial zu dieser erstreckt und mit dieser verbunden ist, wobei der sich in der ersten Kurbelwellenhälfte (18) koaxial zu dieser erstreckende Torsionsstab (31) integral mit der zweiten Kurbelwellenhälfte (19) ausgebildet ist.

2. Tretkraftdetektor nach Anspruch 1, worin die Freilaufkupplung (35) umfaßt: einen mit dem zweiten Ende des Torsionsstabs (31) verbundenen inneren Kupplungsring (33) und einen mit dem Unterstützungsmotor (13) und dem Rad (Wr) verbundenen äußeren Kupplungsring (34), wobei der innere Kupplungsring (33) bezüglich dem äußeren Kupplungsring (34) drehbar in dem äußeren Kupplungsring (34) gelagert ist.

## Revendications

1. Détecteur de force de pédalage comprenant un moyen (S) détecteur de forces de pédalage pour détecter une force de pédalage appliquée à une paire de pédales ($9_R$, $9_L$), destiné à une bicyclette à moteur auxiliaire comprenant un système (D) de transmission de puissance pour transmettre, à une roue (Wr), une force de pédalage appliquée aux pédales ($9_R$, $9_L$), et un moteur auxiliaire (13) intégré dans le système (D) de transmission de puissance, de telle sorte que sa puissance de sortie soit commandée sur la base de la force de pédalage appliquée aux pédales ($9_R$, $9_L$) et détectée par le moyen (S) détecteur de forces de pédalage ;

   ledit moyen (S) détecteur de forces de pédalage comprenant : une barre de torsion (31) présentant une première extrémité reliée à un axe de manivelle (7), devant être mené en rotation par actionnement des pédales ($9_R$, $9_L$), et une seconde extrémité reliée au moteur auxiliaire (13) et à la roue (Wr) par l'intermédiaire d'un embrayage (35) à roue libre ; et un capteur de courses (65) pour détecter l'angle de torsion de la barre de torsion (31) ;

ledit axe de manivelle (7) comprenant un premier demi-axe (18) de manivelle, relié à l'une (9$_R$) des pédales (9$_R$, 9$_L$) et revêtant sensiblement la forme d'un cylindre à fond, et un second demi-axe (19) de manivelle s'étendant coaxialement dans le premier demi-axe (18) de manivelle, auquel il est relié, la barre de torsion (31), s'étendant coaxialement dans le premier demi-axe (18) de manivelle, étant ménagée d'un seul tenant avec le second demi-axe (19) de manivelle.

2. Détecteur de force de pédalage selon la revendication 1, dans lequel l'embrayage (35) à roue libre comprend : une bague intérieure d'embrayage (33) reliée à la seconde extrémité de la barre de torsion (31), et une bague extérieure d'embrayage (34) reliée au moteur auxiliaire (13) et à la roue (Wr), la bague intérieure d'embrayage (33) étant supportée, dans la bague extérieure d'embrayage (34), pour accomplir une rotation par rapport à ladite bague extérieure d'embrayage (34).

Fig. 1

EP 0 700 825 B1

Fig. 2

Fig. 3

Fig. 4

Fig. 5

Fig. 6

Fig. 7

Fig. 8

Fig. 9